# EUROPEAN PATENT APPLICATION

(11) **EP 4 645 408 A1**
(43) Date of publication of application: **05.11.2025**
(21) Application number: 23911552.0
(22) Date of filing: 04.12.2023
(51) Int. Cl.: H01M 4/13, H01M 4/02, H01M 4/62

(54) **POSITIVE ELECTRODE AND SECONDARY BATTERY**

(30) Priority: 26.12.2022 JP 2022208851
(71) Applicant: Panasonic Intellectual Property Management Co., Ltd., Kadoma-shi, Osaka 571-0057 (JP)
(72) Inventor: SHIRAKAMI, Atsuro, Kadoma-shi, Osaka 571-0057 (JP)
(74) Representative: Novagraaf International SA
(86) International application number: PCT/JP2023/043250
(87) International publication number: WO 2024/142771

(57) **Abstract**

A positive electrode 10 according to the present disclosure includes a positive electrode current collector 11 and a positive electrode active material layer 12 supported on the positive electrode current collector 11. The positive electrode active material layer 12 includes a positive electrode active material and a phosphorus compound. The phosphorus compound includes a P=O bond. The positive electrode active material layer 12 is divided into a first region 12a and a second region 12b in a plane direction, a mass ratio P1/A1 of the phosphorus compound to the positive electrode active material in the first region 12a is 0.2 mass% or more and 8 mass% or less, and a mass ratio P2/A2 of the phosphorus compound to the positive electrode active material in the second region 12b is less than 0.2 mass%.

## Description

### TECHNICAL FIELD

The present disclosure relates to a positive electrode and a secondary battery.

### BACKGROUND ART

Conventional secondary batteries are known to undergo side reactions such as reduction and elution of transition metals contained in active materials as well as decomposition reactions of electrolyte solutions caused thereby. Such side reactions accelerate degradation of secondary batteries.

Known techniques for addressing issues of decomposition reactions of electrolyte solutions include, for example, the technique disclosed in Patent Literature 1. Patent Literature 1 describes a coated positive electrode active material having a coating including at least one selected from a specific phosphonic acid and a specific phosphorous triester.

### CITATION LIST

### Patent Literature

Patent Literature 1: WO 2017/126276

### SUMMARY OF INVENTION

### Technical Problem

However, when a positive electrode active material is coated as described above, a significant increase in internal resistance is caused. That is, reducing an increase in internal resistance caused by a configuration for suppressing side reactions is also one of the important issues. The present disclosure provides a positive electrode that can reduce an increase in internal resistance while suppressing side reactions in the positive electrode of a battery.

### Solution to Problem

The positive electrode of the present disclosure includes:
a positive electrode current collector; and
a positive electrode active material layer supported on the positive electrode current collector, wherein
the positive electrode active material layer includes a positive electrode active material and a phosphorus compound,
the phosphorus compound includes a P=O bond,
the positive electrode active material layer is divided into a first region and a second region in a plane direction,
a mass ratio P1/A1 of the phosphorus compound to the positive electrode active material in the first region is 0.2 mass% or more and 8 mass% or less, and
a mass ratio P2/A2 of the phosphorus compound to the positive electrode active material in the second region is less than 0.2 mass%.

### Advantageous Effects of Invention

The present disclosure provides a positive electrode that can reduce an increase in internal resistance while suppressing side reactions in the positive electrode of a battery.

### BRIEF DESCRIPTION OF DRAWINGS

FIG. 1 is a cross-sectional view schematically showing the configuration of a positive electrode 10 according to Embodiment 1.
FIG. 2 is a cross-sectional view and a plan view schematically showing a first example of a positive electrode according to Embodiment 1.
FIG. 3 shows a cross-sectional view and a plan view schematically a second example of the positive electrode according to Embodiment 1.
FIG. 4 is a longitudinal sectional view schematically showing a secondary battery 100 according to Embodiment 2.

### DESCRIPTION OF EMBODIMENTS

Embodiments of the present disclosure are described in detail below with reference to the drawings. The present disclosure is not limited to the following embodiments.

### (Embodiment 1)

A positive electrode according to Embodiment 1 includes a positive electrode current collector and a positive electrode active material layer supported on the positive electrode current collector. The positive electrode active material layer includes a positive electrode active material and a phosphorus compound, and the phosphorus compound includes a P=O bond. The positive electrode active material layer is divided into a first region and a second region in the plane direction thereof. A mass ratio P1/A1 of the phosphorus compound to the positive electrode active material in the first region is 0.2 mass% or more and 8 mass% or less. A mass ratio P2/A2 of the phosphorus compound to the positive electrode active material in the second region is less than 0.2 mass%.

A phosphorus compound including a P=O bond is hereinafter also referred to as a "phosphorus compound". In the positive electrode according to Embodiment 1, the positive electrode active material layer is divided into the first region and the second region in the plane direction thereof based on the content of the phosphorus compound. Accordingly, it is possible to reduce an increase in internal resistance while suppressing side reactions in the positive electrode of a battery.

For example, the positive electrode active material layer includes the first layer including the positive electrode active material and the second layer including the phosphorus compound, and the second layer coats at least a portion of the surface of the first layer.

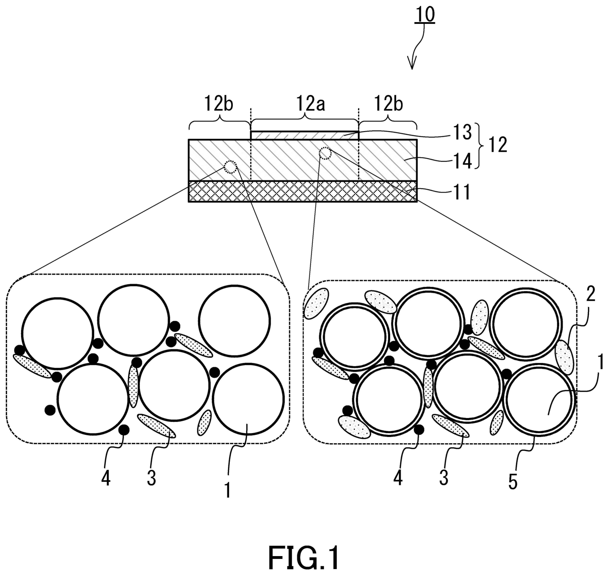

FIG. 1 is a cross-sectional view schematically showing the configuration of a positive electrode 10 according to Embodiment 1. The positive electrode 10 includes a positive electrode current collector 11 and a positive electrode active material layer 12 in this order. The positive electrode active material layer 12 is a layer including a positive electrode active material and a phosphorus compound, and is supported on the positive electrode current collector 11. The positive electrode active material layer 12 includes a first layer 14 including the positive electrode active material and a second layer 13 including the phosphorus compound. The second layer 13 coats at least a portion of the surface of the first layer 14. The positive electrode active material layer 12 is divided into a first region 12a and a second region 12b in the plane direction thereof. The ratio of the mass of the phosphorus compound in the first region 12a to the mass of the positive electrode active material in the first region 12a (mass ratio P1/A1) is 0.2 mass% or more and 8 mass% or less. The ratio of the mass of the phosphorus compound in the second region 12b to the mass of the positive electrode active material in the second region 12b (mass ratio P2/A2) is less than 0.2 mass%.

The mass ratio P1/A1 is calculated using the calculation formula: (mass of phosphorus compound contained in the first region 12a) ÷ (mass of positive electrode active material contained in the first region 12a) × 100. The mass ratio P2/A2 is calculated using the calculation formula: (mass of phosphorus compound contained in the second region 12b) ÷ (mass of positive electrode active material contained in the second region 12b) × 100. The mass ratio P1/A1 and the mass ratio P2/A2 can be determined by measuring the mass percentage of P, for example, by high-frequency inductively coupled plasma (ICP) analysis.

Owing to the inclusion of the phosphorus compound in the positive electrode active material layer 12, side reactions are suppressed. The side reactions to be suppressed include electrolyte decomposition, gas generation caused thereby, and elution of a metal element from the positive electrode active material. Furthermore, in the positive electrode 10 according to Embodiment 1, the positive electrode active material layer 12 is divided into the first region 12a and the second region 12b in the plane direction thereof based on the content of the phosphorus compound. According to the above configuration, it is possible to reduce an increase in internal resistance in a battery while suppressing side reactions. Moreover, according to the above configuration, as compared to a configuration in which the same amount of the phosphorus compound uniformly coats the entire surface of the positive electrode active material layer, it is possible to suppress side reactions, and especially suppress side reactions during long-time charge of a battery.

The following verified, with respect to a positive electrode in which a phosphorus compound solution was applied to the entire surface of a positive electrode active material layer, the relationship between the amount of the phosphorus compound and charge and discharge efficiency and the like. As the phosphorus compound, tris(trimethylsilyl) phosphate (TMSP) was used. When the amount of the phosphorus compound with respect to the positive electrode active material was set to 3.5 mass%, the charge and discharge efficiency in a trickle test was improved and the amount of gas generation was reduced, as compared to a case where no phosphorus compound was added. Furthermore, when the amount of the phosphorus compound was set to 6.8 mass%, the charge and discharge efficiency in the trickle test was improved and the amount of gas generation was reduced, as compared to the case with 3.5 mass%. Accordingly, as the amount of the phosphorus compound increased, the battery degradation suppression effect was observed. When the amount of the phosphorus compound was set to 10.9 mass%, no difference was observed in the charge and discharge efficiency in the trickle test or in the amount of gas generation, as compared to the case with 6.8 mass%. Accordingly, it is inferred that when the amount of the phosphorus compound is in the range of 6.8 mass% to 10.9 mass%, the improvement effects in the charge and discharge efficiency in the trickle test and the amount of gas generation become saturated. Based on the above, it is inferred that the positive electrode of the present disclosure in which the mass ratio of the phosphorus compound to the positive electrode active material in the first region 12a is 8 mass% or less can more effectively suppress battery degradation caused by gas generation in the positive electrode.

The mass ratio P1/A1 may be 6.8 mass% or less. The mass ratio P1/A1 may be 0.5 mass% or more and 8 mass% or less or 0.5 mass% or more and 6.8 mass% or less. The mass ratio P1/A1 may be 0.5 mass% or more and 1.6 mass% or less.

The mass ratio P2/A2 may be less than 50% of the mass ratio P1/A1. The mass ratio P2/A2 may be, for example, 0.15 mass% or less or 0.1 mass% or less.

The second region 12b may include a portion free of the phosphorus compound. For example, as shown in FIG. 1, the second region 12b may include a portion where the second layer 13 is not provided. The second region 12b may consist of a region free of the phosphorus compound. The mass ratio P2/A2 may be 0 mass%.

The area proportion of the first region 12a with respect to the surface of the positive electrode active material layer 12 may be 5% or more and 70% or less. The area proportion of the first region 12a with respect to the surface of the positive electrode active material layer 12 may be 60% or less or 50% or less.

When the area of the first region 12a is 10% or more and 30% or less, the mass ratio P1/A1 may be 0.5 mass% or more and 1 mass% or less, and is more preferably 0.5 mass% or more and 0.9 mass% or less. When the area of the first region 12a is 30% or more and 50% or less, the mass ratio P1/A1 may be 0.8 mass% or more and 1.6 mass% or less, and is more preferably 0.9 mass% or more and 1.3 mass% or less. In the positive electrode active material layer 12, the phosphorus compound also functions as a resistive component. Accordingly, when the positive electrode active material layer 12 includes the phosphorus compound in a localized manner (when the area of the first region 12a is 10% or more and 30% or less), it is not preferable that an increase in resistance derived from the phosphorus compound in the first region 12a be excessively high as compared to that in the second region. In contrast, when the area of the first region 12a is 30% or more and 50% or less, the first region 12a occupies a relatively large proportion of the positive electrode active material layer 12, and consequently the extent of local increase in resistance derived from the phosphorus compound is alleviated. Accordingly, when the area of the first region 12a is set to 10% or more and 30% or less, the mass ratio P1/A1 is preferably smaller than when the area of the first region 12a is set to 30% or more and 50% or less. According to this configuration, side reactions can be further suppressed.

The positive electrode 10 shown in FIG. 1 is an example, and the form of the positive electrode according to Embodiment 1 is not limited to thereto. For example, the positive electrode active material layer 12 may be free of the first layer 14 and the second layer 13. In the positive electrode active material layer 12, the positive electrode active material and the phosphorus compound may be present in a mixed form. In the positive electrode 10 shown in FIG. 1, in the first region 12a, a particle 1 of the positive electrode active material, a phosphorus compound 2, a binder 3, and a conductive additive 4 are present in a mixed form, and the surface of the particle 1 of the positive electrode active material is coated with a phosphorus compound coating 5. The phosphorus compound coating 5 is a coating formed from the phosphorus compound 2. In the second region 12b, the particle 1 of the positive electrode active material, the binder 3, and the conductive additive 4 are present in a mixed form.

For example, in the first region 12a, the vicinity of the interface between the first region 12a and the second region 12b includes a mixture of the particle 1 of the positive electrode active material that is coated with the phosphorus compound coating 5 and the particle 1 of the positive electrode active material that is not coated with the phosphorus compound coating 5.

In the positive electrode 10 shown in FIG. 1, the second region 12b is free of the phosphorus compound 2; however, the second region 12b may include the phosphorus compound 2 as long as the mass ratio P2/A2 is less than 0.2 mass%. For example, in the second region 12b, the vicinity of the interface between the first region 12a and the second region 12b may include the particle 1 of the positive electrode active material that is coated with the phosphorus compound coating 5.

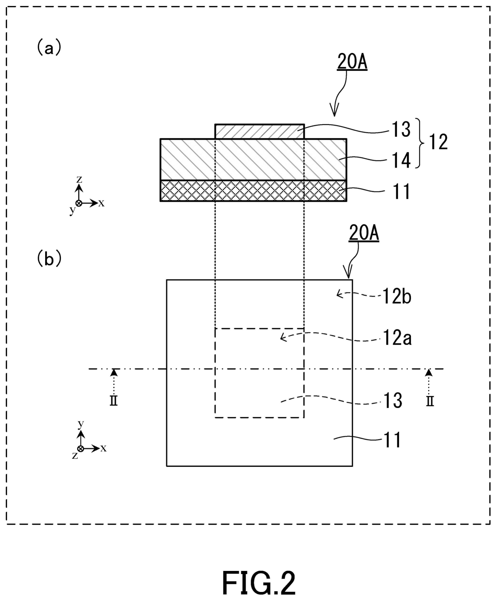

FIG. 2 is a cross-sectional view and a plan view schematically showing a first example of the positive electrode according to Embodiment 1. FIG. 2(a) is a cross-sectional view of a positive electrode 20A. FIG. 2(b) is a plan view of the positive electrode 20A viewed from below in the z-axis direction. In FIG. 2(a), a cross-section at the position indicated by line II-II in FIG. 2(b) is shown. In the present specification and drawings, the x-axis, the y-axis, and the z-axis represent the three axes in a three-dimensional orthogonal coordinate system. In the embodiments, the z-axis direction is defined as the thickness direction of the positive electrode. Moreover, in the present specification, the "thickness direction" refers to a direction perpendicular to the plane up to which the layers are stacked in the positive electrode, unless otherwise specified.

In the positive electrode 20A shown in FIG. 2, the second layer 13 of the positive electrode active material layer 12 coats a central portion of the surface of the first layer 14. The first region 12a is located in a central portion of the positive electrode active material layer 12 in the plane direction and is single. The second region 12b is located around the first region 12a and is single. The expression that the first region 12a or the second region 12b is single means that the first region 12a or the second region 12b is not separated in the in-plane direction of the positive electrode active material layer 12.

When the electrode is an elongated body having a strip shape or the like, the central portion of the positive electrode active material layer 12 in the plane direction corresponds to a central portion of the positive electrode active material layer 12 in the width direction. The first region 12a may be located in the central portion of the positive electrode active material layer 12 in the width direction. The positive electrode active material layer 12 may include the second layer 13 that is strip-shaped and coats a central portion of the surface of the first layer 14 in the width direction.

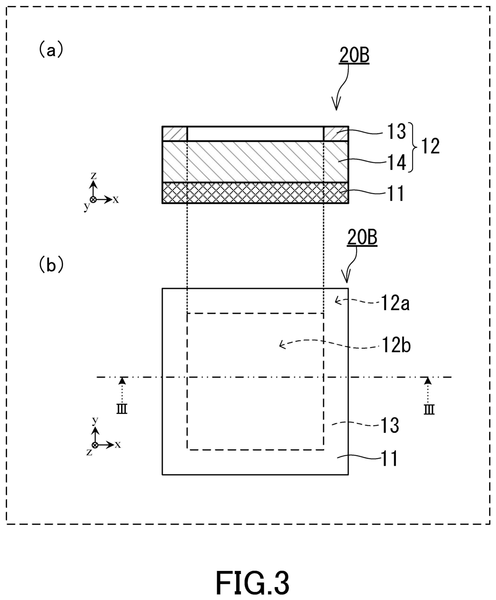

FIG. 3 is a cross-sectional view and a plan view schematically showing a second example of the positive electrode according to Embodiment 1. FIG. 3(a) is a cross-sectional view of a positive electrode 20B. FIG. 3(b) is a plan view of the positive electrode 20B viewed from below in the z-axis direction. In FIG. 3(a), a cross-section at the position indicated by line III-III line in FIG. 3(b) is shown.

In the positive electrode 20B shown in FIG. 3, the second layer 13 coats a region along the outer periphery of the surface of the first layer 14. The second region 12b is located in a central portion of the positive electrode active material layer 12 in the plane direction and is single. The first region 12a is located around the second region 12b and is single. In the present specification, the region along the outer periphery is also referred to as an outer peripheral region. The term "outer periphery" refers to the edges that surround and define the surface. In the positive electrode 20B, the first region 12a is located along the lateral surfaces of the positive electrode active material layer 12.

The number, shape, and area proportion of the first region 12a and the second region 12b in the positive electrode according to Embodiment 1 are not limited to the above examples.

A region where the phosphorus compound is present in 0.2 mass% or more with respect to the positive electrode active material may be unevenly distributed only in a specific region of the positive electrode active material layer 12. For example, the first region 12a is single. In the positive electrode active material layer 12, the phosphorus compound may be unevenly distributed in a specific region in a concentrated manner. The second region 12b may be single or may be present as a plurality of regions. As shown in FIGS. 2 and 3, the first region 12a and the second region 12b each may be single.

When the positive electrode active material layer 12 is viewed from at least one direction selected from the group consisting of the longitudinal direction and the lateral direction, the first region 12a and the second region 12b may be present. The terms "longitudinal direction" and "lateral direction" respectively refer to the long-side direction and the width direction of an elongated body. The positive electrode active material layer 12 may be divided in the width direction or in the longitudinal direction into the first region 12a and the second region 12b. The single first region 12a may be located between the two second regions 12b in the width direction or in the longitudinal direction of the positive electrode active material layer 12.

The positive electrode active material layer 12 includes the phosphorus compound including a P=O bond. The phosphorus compound is, for example, phosphoric acid, phosphonic acid, phosphinic acid, pyrophosphoric acid, a phosphate ester, a phosphonate ester, a phosphinate ester, a derivative thereof, or a condensate thereof. The phosphorus compound may be an organic phosphorus compound. In the present specification, the term "organic phosphorus compound" means a compound containing carbon and phosphorus. The phosphorus compound may be an organic phosphorus compound including a carbon-phosphorus bond. The phosphorus compound may include a P-O-P bond. The phosphorus compound may be polyphosphoric acid, a polyphosphate ester, or a derivative thereof.

When the positive electrode active material layer 12 includes the first layer 14 and the second layer 13, the second layer 13 may consist substantially of the phosphorus compound. "The second layer 13 consists substantially of the phosphorus compound" means that the mass percentage of the phosphorus compound in the second layer 13 is 97 mass% or more. The mass percentage of the phosphorus compound in the second layer 13 may be 98 mass% or more or 99 mass% or more. The second layer 13 may consist of the phosphorus compound.

The phosphorus compound may include a structure represented by chemical formula (1).

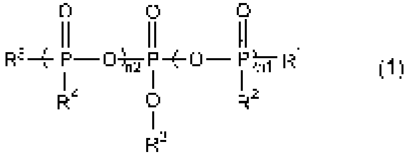

In the chemical formula (1), n1 and n2 are each independently an integer equal to or greater than 0; R¹, R², R⁴, and R⁵ each independently represent -OR or -(CH₂)ₘ₁X1; R³ and R each independently represent a direct bond to the positive electrode active material, a hydrogen atom, -(CH₂)ₘ₂X2, a trimethylsilyl group, or a triethylsilyl group; m1 is an integer from 0 to 15; m2 is a natural number from 1 to 3; X1 and X2 each independently represent a hydrogen atom, a hydroxy group, an amino group, a carboxy group, a cyano group, or a fluorine atom; when a plurality of R²s are present, the plurality of R²s are independent of each other; and when a plurality of R⁴s are present, the plurality of R⁴s are independent of each other.

Owing to the inclusion of this structure, the phosphorus compound is relatively stable even in a high-voltage environment. Accordingly, even when the upper limit voltage of a secondary battery is high, for example, exceeding 4.3 V, it is possible to sufficiently suppress side reactions such as oxidative decomposition of the electrolyte. Furthermore, the effect of suppressing side reactions can be sustained for a longer period.

In the chemical formula (1), n1 and n2 each may be independently 1 or greater; at least one selected from the group consisting of n1 and n2 may be 1 or greater; n1 and n2 each may be independently 500 or smaller; X1 may be a hydrogen atom; and X2 may be a hydrogen atom.

In the chemical formula (1), m1 may be an integer from 0 to 11 or an integer from 0 to 6. When m1 is an integer from 0 to 6, side reactions can be further suppressed.

In the chemical formula (1), m2 may be 1 or 2; and R³ may be a direct bond to the positive electrode active material.

The phosphorus compound is, for example, a silyl phosphite, phosphonic acid, phosphoric acid, pyrophosphoric acid, or a condensate thereof. The phosphorus compound may be a silyl phosphite, tris(trimethylsilyl) phosphate (TMSP), or a TMSP-derived compound, such as a condensate of TMSP. In the chemical formula (1), R¹, R², R⁴, and R⁵ each may independently represent -OR, and R³ and R each may independently represent a direct bond to the positive electrode active material, a hydrogen atom, or a trimethylsilyl group.

The phosphorus compound may be phosphoric acid or a condensate of phosphoric acid. In the chemical formula (1), R¹, R², R⁴, and R⁵ each may independently represent -OR, and R³ and R each may independently represent a direct bond to the positive electrode active material or a hydrogen atom, or each may independently represent a hydrogen atom.

The positive electrode active material layer 12 may include one or two or more phosphorus compounds.

The positive electrode active material layer 12 includes the phosphorus compound. For example, in the positive electrode active material layer 12, the second layer 13 coats at least a portion of the surface of the first layer 14. According to this configuration, direct contact between the positive electrode active material and the electrolyte is hindered, thereby suppressing side reactions such as decomposition of the electrolyte. As shown in FIGS. 2 and 3, the second layer 13 may coat a portion of the first layer 14 to divide the positive electrode active material layer 12 into the first region 12a and the second region 12b. The second layer 13 may coat the central portion of the surface of the first layer 14, while the outer peripheral region of the surface of the first layer 14 may not be coated with the second layer 13. The second layer 13 may coat an outer peripheral region of the surface of the positive electrode active material layer 12, while a central portion of the surface of the positive electrode active material layer 12 may not be coated with the second layer 13. The second layer 13 may coat a portion of the surface of the elongated first layer 14 in the width direction. The second layer 13 may coat a portion of the surface of the elongated first layer 14 in the longitudinal direction. In the positive electrode active material layer 12, the phosphorus compound may be unevenly distributed in a specific region, and is, for example, unevenly distributed in a specific region. The second layer 13 may coat a portion of the surface of the first layer 14 and be single. The expression that the second layer 13 is single means that the second layer 13 is not separated in the plane direction of the positive electrode active material layer 12.

The second layer 13 may entirely coat one surface of the first layer 14. In this case, the concentration of the phosphorus compound in the second layer 13 in the plane direction of the second layer 13 is adjusted, so that the positive electrode active material layer 12 can be divided into the first region 12a and the second region 12b.

As described above, the positive electrode according to Embodiment 1 includes, in a portion of the positive electrode active material layer, a region having a low concentration of the phosphorus compound or a region not coated with the phosphorus compound, and therefore an increase in the internal resistance of a battery can be reduced.

Owing to the inclusion of a larger amount of the phosphorus compound, the first region 12a exhibits increased resistance as compared to the second region 12b. Consequently, the potential during charge is relatively higher in the first region 12a and relatively lower in the second region 12b. On the other hand, owing to the inclusion of a sufficient amount of the phosphorus compound, the first region 12a has enhanced voltage resistance. Since side reactions such as electrolyte decomposition during charge are accelerated in a portion with higher potential as compared to those in a portion with lower potential, such side reactions are more likely to occur in the first region 12a and less likely to occur in the second region 12b. However, in the first region 12a, which has enhanced voltage resistance, side reactions can be suppressed. As described above, the positive electrode according to Embodiment 1 includes a region where side reactions are less likely to occur and a region where side reactions can be suppressed, and thus can suppress side reactions as a whole. Therefore, for example, by designing the amount of the phosphorus compound in the second layer 13 coating the surface of the first layer 14 and the area of the second layer 13 coating the surface of the first layer 14, it is possible to suppress side reactions while reducing an increase in internal resistance, as compared to a positive electrode in which the same amount of the phosphorus compound uniformly coats the entire surface of the positive electrode active material layer.

The thickness of the second layer 13 in the first region 12a may be 0.05 µm or more and 2 µm or less.

The second layer 13 may be in contact with the first layer 14.

The phosphorus compound may or may not form a chemical bond to the positive electrode active material. The phosphorus compound may be physically attached to the positive electrode active material.

The positive electrode active material layer 12 includes a positive electrode active material. The positive electrode active material is not particularly limited. The positive electrode active material can be a lithium-containing transition metal oxide, a lithium-containing transition metal phosphate, a transition metal fluoride, a polyanion material, a fluorinated polyanion material, a transition metal sulfide, a transition metal oxysulfide, a transition metal oxynitride, or the like. In particular, in the case where a lithium-containing transition metal oxide or a lithium-containing transition metal phosphate is used as the positive electrode active material, the cost for manufacturing a battery can be reduced and the average discharge voltage can be enhanced. Examples of lithium-containing transition metal oxides include lithium cobalt oxide, lithium nickel cobalt aluminum oxide, lithium nickel cobalt manganese oxide, and lithium nickel manganese oxide. Examples of lithium-containing transition metal phosphates include lithium iron phosphate, lithium vanadium phosphate, lithium cobalt phosphate, and lithium nickel phosphate.

The positive electrode active material may include a lithium nickel oxide having a layered rock salt-type crystal structure. The proportion of Ni among metal elements excluding Li that are contained in the lithium nickel oxide may be 50 atom% or more. The lithium nickel oxide may include other transition metals. Lithium nickel oxides are useful for achieving a high operating voltage. According to the configuration of the positive electrode according to Embodiment 1, elution of metal ions from the positive electrode active material can potentially be suppressed. Since nickel is susceptible to elution from the positive electrode active material, the technique of the present disclosure is particularly expected to be effective in suppressing such elution.

The lithium nickel oxide may be represented by the following composition formula (I). An element M1 is at least one selected from the group consisting of V, Co, and Mn. An element M2 is at least one selected from the group consisting of Mg, Al, Ca, Ti, Cu, Zn, and Nb. The composition formula (I) satisfies 0.9 ≤ α ≤ 1.10, -0.05 ≤ β ≤ 0.05, 0.5 ≤ x1 < 1, 0 ≤ x2 ≤ 0.5, and 0 < 1-x1-x2 ≤ 0.5.

Li_{α}Niₓ₁M1ₓ₂M2(₁₋ₓ₁₋ₓ₂)O_{2+β} (I)

The positive electrode active material layer 12 may include other materials such as a binder, an ion conductor, and a conductive additive. When the positive electrode active material layer 12 includes the first layer 14 and the second layer 13, the first layer 14 may include other materials such as a binder, an ion conductor, and a conductive additive, in addition to the positive electrode active material.

The positive electrode current collector 11 can be, for example, a metal foil. Examples of a metal constituting the positive electrode current collector 11 include aluminum, titanium, an alloy containing any of these metal elements, and stainless steel.

The positive electrode according to Embodiment 1 can be manufactured, for example, by the following method.

A positive electrode slurry including a positive electrode active material is prepared. For example, the positive electrode active material, a binder, and a conductive additive are dispersed in a dispersion medium to prepare the positive electrode slurry.

The positive electrode slurry is applied to the positive electrode current collector 11 to form the positive electrode active material layer 12. Specifically, a coating film is formed by applying the positive electrode slurry to the positive electrode current collector 11. The dispersion medium is removed from the coating film, and the first layer 14 is thus obtained. An example of a method for removing the dispersion medium is heating the coating film. The dispersion medium is, for example, N-methyl-2-pyrrolidone (NMP).

Next, a solution including a phosphorus compound and a solvent is prepared.

As described above, the phosphorus compound includes the structure represented by the chemical formula (1). The phosphorus compound in the raw material stage refers to a compound in a state before condensation with other phosphorus compounds and/or bonding to the positive electrode active material can occur, and thus can be distinguished from the phosphorus compound contained in the positive electrode active material layer 12. The phosphorus compound in the raw material stage includes, for example, a structure represented by chemical formula (2).

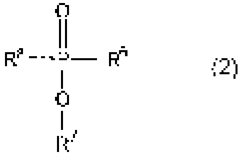

In the chemical formula (2), R⁷ represents a hydrogen atom, -(CH₂)ₖ₁Y1, a trimethylsilyl group, or a triethylsilyl group; R⁶ and R⁸ each independently represent -OR or -(CH₂)ₖ₂Y2; R represents a hydrogen atom, -(CH₂)ₖ₃Y3, a trimethylsilyl group, or a triethylsilyl group; k1 and k3 are each independently a natural number from 1 to 3; k2 is an integer from 0 to 15; and Y1, Y2, and Y3 each independently represent a hydrogen atom, a hydroxy group, an amino group, a carboxy group, a cyano group, or a fluorine atom.

The phosphorus compound in the raw material stage may include at least one selected from the group consisting of a silyl phosphite and phosphoric acid. The silyl phosphite may be TMSP.

As the solvent, a cyclic carbonate, a chain carbonate, a cyclic carboxylate, or the like is used. Examples of cyclic carbonates include propylene carbonate (PC). Examples of chain carbonates include diethyl carbonate (DEC), ethyl methyl carbonate (EMC), and dimethyl carbonate (DMC). Examples of cyclic carboxylates include Y-butyrolactone (GBL) and γ-valerolactone (GVL). One solvent may be used alone or a combination of two or more solvents may be used.

The prepared solution is applied to the first layer 14 to form the second layer 13. For example, a coating film is formed by selectively applying the solution to the desired position on the first layer 14. A pipettor may be used to apply the solution to the desired position, or a portion of the surface of the first layer 14 may be masked before the solution is applied. The solvent is removed from the coating film, and the second layer 13 is thus obtained. An example of a method for removing the solvent is heating the coating film. The heating temperature is, for example, 20°C or more and 60°C or less. The heating time is, for example, 15 minutes or more and 120 minutes or less. Thus, the positive electrode is obtained in which division into the first region 12a and the second region 12b is conducted.

### (Embodiment 2)

A secondary battery according to Embodiment 2 includes the positive electrode according to Embodiment 1, a negative electrode, and an electrolyte. By using the positive electrode according to Embodiment 1, characteristics of the secondary battery can be improved.

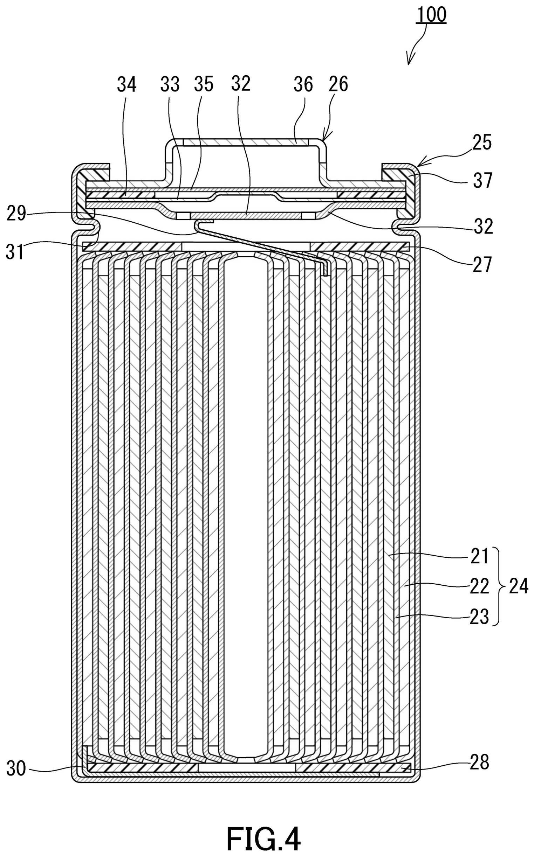

FIG. 4 is a longitudinal sectional view schematically showing a secondary battery 100 according to Embodiment 2. The secondary battery 100 is a cylindrical battery that includes a cylindrical battery case, a wound-type electrode group 24, and an electrolyte solution that is not illustrated. The electrode group 24 is housed in the battery case and is in contact with the electrolyte solution.

The battery case is composed of a case body 25 that is a bottomed cylindrical metal-made container and a sealing body 26 that seals the opening of the case body 25. A gasket 37 is disposed between the case body 25 and the sealing body 26. The gasket 37 ensures hermetic sealing of the battery case. Within the case body 25, insulating plates 27 and 28 are disposed at the respective ends of the electrode group 24 in the direction of the winding axis of the electrode group 24.

The case body 25 has, for example, a stepped portion 31. The stepped portion 31 can be formed by pressing a portion of the side wall of the case body 25 from the outside. The stepped portion 31 may be formed in an annular shape on the side wall of the case body 25 along the circumferential direction of a virtual circle defined by the case body 25. In this case, the sealing body 26 is supported, for example, by the surface of the stepped portion 31 facing the opening.

The sealing body 26 includes a filter 32, a lower valve body 33, an insulating member 34, an upper valve body 35, and a cap 36. In the sealing body 26, these components are stacked in the above order. The sealing body 26 is attached to the opening of the case body 25 so that the cap 36 is located outside the case body 25 and the filter 32 is located inside the case body 25.

The above components of the sealing body 26 are each, for example, disk-shaped or ring-shaped. The above components are electrically connected to each other, except for the insulating member 34.

The electrode group 24 includes a positive electrode 21, a negative electrode 22, and a separator 23. The positive electrode 21, the negative electrode 22, and the separator 23 are all strip-shaped. The width directions of the strip-shaped positive electrode 21 and negative electrode 22 are parallel to the winding axis of the electrode group 24, for example. The separator 23 is disposed between the positive electrode 21 and the negative electrode 22. The positive electrode 21 and the negative electrode 22 are spirally wound with the separator 23 interposed between these electrodes.

When a cross-section of the secondary battery 100 in a direction orthogonal to the winding axis of the electrode group 24 is observed, the positive electrode 21 and the negative electrode 22 are alternately stacked in the radial direction of a virtual circle defined by the case body 25, with the separator 23 interposed between these electrodes.

The positive electrode 21 is electrically connected, via a positive electrode lead 29, to the cap 36 that also serves as the positive electrode terminal. One end of the positive electrode lead 29 is, for example, connected to the vicinity of the center of the positive electrode 21 in the longitudinal direction of the positive electrode 21. The positive electrode lead 29 extends from the positive electrode 21 to the filter 32 through a through hole formed in the insulating plate 27. The other end of the positive electrode lead 29 is, for example, welded to the surface of the filter 32 facing the electrode group 24.

The negative electrode 22 is electrically connected, via a negative electrode lead 30, to the case body 25 that also serves as the negative electrode terminal. One end of the negative electrode lead 30 is, for example, connected to an end of the negative electrode 22 in the longitudinal direction of the negative electrode 22. The other end of the negative electrode lead 30 is, for example, welded to the inner bottom surface of the case body 25.

The constituent elements of the secondary battery 100 are described in detail below.

The positive electrode 21 is the positive electrode according to Embodiment 1.

The negative electrode 22 includes a material having properties of occluding and releasing metal ions (e.g., lithium ions). The negative electrode 22 includes, for example, a negative electrode active material. The negative electrode may include a negative electrode current collector and a negative electrode active material layer supported on the surface of the negative electrode current collector.

The negative electrode current collector is, for example, a foil made of a metal material such as stainless steel, nickel, a nickel alloy, copper, or a copper alloy.

The negative electrode active material layer includes a negative electrode active material. The negative electrode active material can be a material capable of occluding and releasing lithium ions. Examples of the negative electrode active material include lithium titanate, graphite, silicon, a silicon compound, and a NiBi alloy.

The negative electrode active material layer may include other materials such as a conductive additive, an ion conductor, and a binder.

The electrolyte solution may include a nonaqueous solvent and a lithium salt dissolved in the nonaqueous solvent. The concentration of the lithium salt in the electrolyte solution may be, for example, 0.5 mol/L or more and 2 mol/L or less. By controlling the lithium salt concentration within the above range, an electrolyte solution with excellent ion conductivity and moderate viscosity can be obtained. However, the lithium salt concentration is not limited to the above.

The nonaqueous solvent can be a cyclic carbonate, a chain carbonate, a cyclic ether, a chain ether, a nitrile, an amide, or the like. One selected from these solvents may be used, or two or more thereof may be used in combination.

The lithium salt can be lithium hexafluorophosphate (LiPF₆), lithium tetrafluoroborate (LiBF₄), lithium perchlorate (LiClO₄), lithium bis(fluorosulfonyl)imide (LiFSI), lithium bis(trifluoromethanesulfonyl)imide (LiTFSI), lithium bis(perfluoroethylsulfonyl)imide (LiN(SO₂C₂F₅)₂), LiAsF₆, LiCF₃SO₃, lithium difluoro(oxalato)borate, or the like. One selected from these electrolyte salts may be used, or two or more thereof may be used in combination.

It is usually preferable that a separator be interposed between the positive electrode and the negative electrode. The separator 23 has high ion permeability and moderate mechanical strength and insulation properties. The separator 23 can be a microporous film, a woven fabric, a nonwoven fabric, or the like. The material of the separator 23 can be, for example, a polymer. The polymer may be, for example, polyolefin, such as polypropylene or polyethylene.

In the secondary battery of the present disclosure, a polymer provided as the separator may be impregnated with the electrolyte solution, for example. That is, the secondary battery of the present disclosure may have a structure in which an electrolyte solution and a polymer are used in combination.

The secondary battery of the present disclosure may further include a solid electrolyte as an electrolyte. That is, the secondary battery of the present disclosure may have a hybrid structure in which an electrolyte solution and a solid electrolyte are used in combination. Examples of the solid electrolyte material include a halide solid electrolyte, a sulfide solid electrolyte, an oxide solid electrolyte, and an organic polymer solid electrolyte. In the present disclosure, the term "halide solid electrolyte" means a solid electrolyte that contains a halogen element as the main component of the anions. The term "sulfide solid electrolyte" means a solid electrolyte that contains sulfur as the main component of the anions. The term "oxide solid electrolyte" means a solid electrolyte that contains oxygen as the main component of the anions. The term "main component of the anions" means the anion having the largest amount of substance among all the anions constituting the solid electrolyte. The coating material in the secondary battery of the present disclosure can include a halide solid electrolyte.

In the present disclosure, as an example of the structure of a battery according to Embodiment 2, the configuration example shown in FIG. 4 is described. In this example, the secondary battery includes a stacked-type electrode group in which a positive electrode and a negative electrode are stacked with a separator interposed therebetween, and an electrolyte solution, both of which are housed in an exterior body. However, the secondary battery according to the present disclosure is not limited to this configuration example. The secondary battery according to the present disclosure may have a shape of, for example, a cylindrical type, a prismatic type, a coin type, a button type, or a laminate type. Furthermore, as the electrode group in the secondary battery according to the present disclosure, the stacked-type electrode group may be replaced with any other type of electrode group such as an electrode group in which a positive electrode and a negative electrode are wound with a separator interposed therebetween.

The positive electrode of Embodiment 1 is not limited in application to the secondary battery 100. In addition to lithium secondary batteries, the positive electrode of Embodiment 1 can be applied to various secondary batteries, such as sodium secondary batteries and magnesium secondary batteries. These various secondary batteries may be batteries using an electrolyte solution or may be solid-state batteries.

### (Other Embodiments)

### (Supplementary Note)

The above description of the embodiments discloses the following techniques.

### (Technique 1)

A positive electrode including:
a positive electrode current collector; and
a positive electrode active material layer supported on the positive electrode current collector, wherein
the positive electrode active material layer includes a positive electrode active material and a phosphorus compound,
the phosphorus compound includes a P=O bond,
the positive electrode active material layer is divided into a first region and a second region in a plane direction,
a mass ratio P1/A1 of the phosphorus compound to the positive electrode active material in the first region is 0.2 mass% or more and 8 mass% or less, and
a mass ratio P2/A2 of the phosphorus compound to the positive electrode active material in the second region is less than 0.2 mass%.

According to this configuration, it is possible to reduce an increase in internal resistance while suppressing side reactions in the positive electrode of the battery.

### (Technique 2)

The positive electrode according to Technique 1, wherein the mass ratio P2/A2 is less than 50% of the mass ratio P1/A1. According to this configuration, an increase in internal resistance can be further reduced.

### (Technique 3)

The positive electrode according to Technique 1 or 2, wherein the second region includes a portion free of the phosphorus compound. According to this configuration, an increase in internal resistance can be further reduced.

### (Technique 4)

The positive electrode according to any one of Techniques 1 to 3, wherein an area proportion of the first region with respect to a surface of the positive electrode active material layer is 5% or more and 70% or less. According to this configuration, it is possible to reduce an increase in internal resistance while suppressing side reactions in the positive electrode of the battery.

### (Technique 5)

The positive electrode according to any one of Techniques 1 to 4, wherein when an area proportion of the first region is 10% or more and 30% or less, the mass ratio P1/A1 is 0.5 mass% or more and 1 mass% or less. According to this configuration, side reactions in the positive electrode of the battery can be further suppressed.

### (Technique 6)

The positive electrode according to any one of Techniques 1 to 5, wherein when an area proportion of the first region is more than 30% and 50% or less, the mass ratio P1/A1 is 0.8 mass% or more and 1.6 mass% or less. According to this configuration, side reactions in the positive electrode of the battery can be further suppressed.

### (Technique 7)

The positive electrode according to any one of Techniques 1 to 6, wherein the first region is located in a central portion of the positive electrode active material layer in the plane direction. According to this configuration, side reactions in the positive electrode of the battery can be further suppressed. Furthermore, an increase in internal resistance can be further reduced.

### (Technique 8)

The positive electrode according to any one of Techniques 1 to 7, wherein the phosphorus compound includes a P-O-P bond. According to this configuration, side reactions in the positive electrode of the battery can be further suppressed.

### (Technique 9)

The positive electrode according to any one of Techniques 1 to 8, wherein
the phosphorus compound includes a structure represented by chemical formula (1): 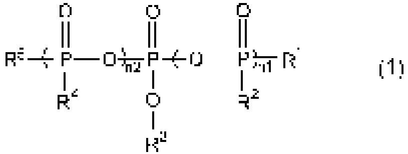
where n1 and n2 are each independently an integer equal to or greater than 0,
R¹, R², R⁴, and R⁵ each independently represent -OR or -(CH₂)ₘ₁X1,
R³ and R each independently represent a direct bond to the positive electrode active material, a hydrogen atom, -(CH₂)ₘ₂X2, a trimethylsilyl group, or a triethylsilyl group,
m1 is an integer from 0 to 15,
m2 is a natural number from 1 to 3,
X1 and X2 each independently represent a hydrogen atom, a hydroxy group, an amino group, a carboxy group, a cyano group, or a fluorine atom,
when a plurality of R²s are present, the plurality of R²s are independent of each other, and
when a plurality of R⁴s are present, the plurality of R⁴s are independent of each other.

Owing to the inclusion of this structure, the phosphorus compound is relatively stable even in a high-voltage environment. Accordingly, even when the upper limit voltage of the battery is high, it is possible to sufficiently suppress side reactions such as oxidative decomposition of the electrolyte. Furthermore, the effect of suppressing side reactions can be sustained for a longer period.

### (Technique 10)

The positive electrode according to Technique 9, wherein in the chemical formula (1), R¹, R², R⁴, and R⁵ each independently represent -OR, and R³ and R each independently represent a direct bond to the positive electrode active material, a hydrogen atom, or a trimethylsilyl group. According to this configuration, side reactions in the positive electrode of the battery can be further suppressed. Furthermore, an increase in internal resistance can be further reduced.

### (Technique 11)

The positive electrode according to any one of Techniques 1 to 10, wherein the positive electrode active material layer includes a first layer including the positive electrode active material and a second layer including the phosphorus compound, and the second layer coats at least a portion of a surface of the first layer.

### (Technique 12)

A secondary battery including:
the positive electrode according to any one of Techniques 1 to 11;
a negative electrode; and
an electrolyte.

According to this configuration, characteristics of the secondary battery, such as charge and discharge efficiency, can be improved.

### Examples

The present disclosure is described in more detail below with reference to examples. The following examples are merely illustrative of one embodiment and are not intended to limit the present disclosure.

### (Example 1)

A positive electrode slurry was prepared by stirring a positive electrode active material having a composition of LiNi_{0.5}Co_{0.2}Mn_{0.3}O₂ (NCM523), acetylene black (AB), polyvinylidene fluoride (PVDF) with N-methyl-2-pyrrolidone (NMP) mixed. The mass ratio of these materials in the positive electrode active material layer was NCM523:AB:PVDF = 92:5:3.

The positive electrode slurry was applied to the surface of an aluminum foil (1.5 cm × 1.5 cm), the coating film was dried, and then rolled to form a positive electrode composite layer including the positive electrode active material. The positive electrode composite layer was formed on one surface of the aluminum foil.

Tris(trimethylsilyl) phosphate (TMSP) was added to dimethyl carbonate (DMC) to obtain a TMSP solution. The concentration of TMSP in the TMSP solution was adjusted to 2 mass%.

The TMSP solution was applied using a pipettor onto the positive electrode composite layer obtained above to form a coating film. At this stage, the TMSP solution was applied to a central portion of the surface of the positive electrode composite layer so that the area of the coating film would account for 50% of the surface area of the positive electrode composite layer. At this stage, the mass ratio of TMSP to the positive electrode active material was adjusted to 0.5 mass%. That is, in the region to which the TMSP solution was applied, the mass ratio of TMSP to the positive electrode active material was adjusted to 1 mass%. The coating film was dried to form a phosphorus-containing layer. Thus, a positive electrode of Example 1 including a positive electrode current collector and a positive electrode active material layer was obtained. In the positive electrode of Example 1, the mass ratio P1/A1 was 1 mass% and the mass ratio P2/A2 was 0 mass%. The positive electrode composite layer and the phosphorus-containing layer respectively correspond to the first layer 14 and the second layer 13 of the present disclosure.

The positive electrode of Example 1, a Li metal foil serving as the counter electrode, a separator, and an electrolyte solution were used to fabricate the evaluation cell of Example 1. As the separator, a PP/PE/PP three-layer separator was used. The concentration of LiPF₆ in the electrolyte solution was 13 mol/L. The solvent for the electrolyte solution contained ethylene carbonate (EC) and DMC in a volume ratio of EC:DMC = 25:75.

### (Example 2)

A positive electrode of Example 2 was fabricated in the same manner as in Example 1, except that in the formation of the phosphorus-containing layer, the TMSP solution was applied to an outer peripheral region of the surface of the positive electrode composite layer so that the area of the coating film would account for 50% of the surface area of the positive electrode composite layer. In the positive electrode of Example 2, the mass ratio P1/A1 was 1 mass% and the mass ratio P2/A2 was 0 mass%. The positive electrode of Example 2 was used to fabricate the evaluation cell of Example 2 in the same manner as in Example 1.

### (Example 3)

A positive electrode composite layer was formed on a positive electrode current collector in the same manner as in Example 1.

Phosphoric acid (H₃PO₄) was added to a solvent containing DMC and γ-butyrolactone (GBL) in a volume ratio of DMC:GBL = 90:10 to obtain a phosphoric acid solution. The concentration of phosphoric acid in the phosphoric acid solution was adjusted to 0.2 mass%.

The phosphoric acid solution was applied using a pipettor onto the positive electrode composite layer to form a coating film. At this stage, in the same manner as Example 1, the phosphoric acid solution was applied to a central portion of the surface of the positive electrode composite layer so that the area of the coating film would account for 50% of the surface area of the positive electrode composite layer. At this stage, the mass ratio of phosphoric acid to the positive electrode active material was adjusted to 0.2 %. That is, in the region to which the phosphoric acid solution was applied, the mass ratio of phosphoric acid to the positive electrode active material was adjusted to 0.4 mass%. The coating film was dried to form a phosphorus-containing layer. Thus, a positive electrode of Example 3 including a positive electrode current collector and a positive electrode active material layer was obtained. In the positive electrode of Example 3, the mass ratio P1/A1 was 0.4 mass% and the mass ratio P2/A2 was 0 mass%.

The positive electrode of Example 3 was used to fabricate the evaluation cell of Example 3 in the same manner as in Example 1.

### (Comparative Example 1)

In the formation of the phosphorus-containing layer, the same amount of the TMSP solution as in Example 1 was applied to the entire surface of the positive electrode composite layer formed on the positive electrode current collector. A positive electrode of Comparative Example 1 was fabricated in the same manner as in Example 1 except for the above.

The positive electrode of Comparative Example 1 was used to fabricate the evaluation cell of Comparative Example 1 in the same manner as in Example 1.

### (Reference Example 1)

A positive electrode of Reference Example 1 was obtained in the same manner as in Example 1, except that a phosphorus-containing layer was not formed.

The positive electrode of Reference Example 1 was used to fabricate the evaluation cell of Reference Example 1 in the same manner as in Example 1.

### [Evaluation of Battery]

The evaluation cells of the examples, comparative example, and reference example were subjected to two repeated charge and discharge cycles at an ambient temperature of 25°C, in which constant-current charge was conducted at a current value of 0.1C until the voltage reached 4.6 V and constant-current discharge was conducted at a current value of 0.1C until the voltage reached 2.5 V. Subsequently, a trickle test was conducted in the following procedure. A trickle charge was conducted in which constant-current charge was conducted at a current value of 0.2C until the voltage reached 4.6 V, and then the voltage of 4.6 V was maintained for 3 days at an ambient temperature of 55°C. Subsequently, discharge was conducted at a current value of 0.1C at an ambient temperature of 25°C.

The evaluation results are shown in Table 1. The internal resistance is expressed as a relative value based on 100% of the internal resistance of Reference Example 1, and was calculated from the discharge curve at the initial charge and discharge cycle. The charge and discharge efficiency is the charge and discharge efficiency in the trickle test, and was calculated as 100 × (discharge amount in trickle test)/(total charge amount in trickle test). The amount of gas generation is the amount of gas generated in the battery in the trickle test, and was calculated as {(volume of battery after trickle test) - (volume of battery before trickle test)}/(mass of positive electrode active material).

In Table 1, "Location" represents the location of the phosphorus-containing layer on the surface of the positive electrode composite layer. "Area ratio" represents the ratio of the surface area of the phosphorus-containing layer to the surface area of the positive electrode composite layer facing the phosphorus-containing layer. "Phosphorus compound amount" represents the ratio of the mass of the used phosphorus compound to the mass of the positive electrode active material in the entire positive electrode active material layer. "Coated region mass ratio" represents the ratio, in the positive electrode active material layer, of the mass of the phosphorus compound to the mass of the positive electrode active material in the region coated with the phosphorus-containing layer.

**[Table 1]**

| | Phosphorus compound | Location | Area ratio (%) | Phosphorus compound amount (mass%) | Coated region mass ratio (mass%) | Internal resistance (%) | Charge and discharge efficiency (%) | Amount of gas generation (cc/g) |
|---|---|---|---|---|---|---|---|---|
| Example 1 | TMSP | Central region | 50 | 0.5 | 1 | 151 | 87.3 | 0.057 |
| Example 2 | TMSP | Outer peripheral region | 50 | 0.5 | 1 | 183 | 82.9 | 0.113 |
| Example 3 | H₃PO₄ | Central region | 50 | 0.2 | 0.4 | 114 | 83 | 0.082 |
| Comparative Example 1 | TMSP | Entire region | 100 | 0.5 | 0.5 | 217 | 82.0 | 0.115 |
| Reference Example 1 | - | - | - | 0 | 0 | 100 | 80.7 | 0.561 |

From Table 1, it can be seen that the batteries of Examples 1 to 3 can exhibit reduced increases in internal resistance, suppressed amounts of gas generation, and enhanced charge and discharge efficiency, as compared to the battery of Comparative Example 1. It can be seen that the batteries of Examples 1 to 3 can exhibit significantly suppressed amounts of gas generation and enhanced charge and discharge efficiency without a significant increase in internal resistance, as compared to the battery of Reference Example 1. Based on the above, it is inferred that the positive electrode of the present disclosure further suppressed side reactions such as decomposition of the electrolyte solution while reducing an increase in internal resistance.

### INDUSTRIAL APPLICABILITY

The technique of the present disclosure is useful for secondary batteries used as power sources in mobile communication devices, portable electronic devices, electric vehicles, and the like.

## Claims

1. A positive electrode comprising:
a positive electrode current collector; and
a positive electrode active material layer supported on the positive electrode current collector, wherein
the positive electrode active material layer comprises a positive electrode active material and a phosphorus compound,
the phosphorus compound comprises a P=O bond,
the positive electrode active material layer is divided into a first region and a second region in a plane direction,
a mass ratio P1/A1 of the phosphorus compound to the positive electrode active material in the first region is 0.2 mass% or more and 8 mass% or less, and
a mass ratio P2/A2 of the phosphorus compound to the positive electrode active material in the second region is less than 0.2 mass%.

2. The positive electrode according to claim 1, wherein
the mass ratio P2/A2 is less than 50% of the mass ratio P1/A1.

3. The positive electrode according to claim 1, wherein
the second region comprises a portion free of the phosphorus compound.

4. The positive electrode according to claim 1, wherein
an area proportion of the first region with respect to a surface of the positive electrode active material layer is 5% or more and 70% or less.

5. The positive electrode according to claim 1, wherein
when an area proportion of the first region is 10% or more and 30% or less, the mass ratio P1/A1 is 0.5 mass% or more and 1 mass% or less.

6. The positive electrode according to claim 1, wherein
when an area proportion of the first region is more than 30% and 50% or less, the mass ratio P1/A1 is 0.8 mass% or more and 1.6 mass% or less.

7. The positive electrode according to claim 1, wherein
the first region is located in a central portion of the positive electrode active material layer in the plane direction.

8. The positive electrode according to claim 1, wherein
the phosphorus compound comprises a P-O-P bond.

9. The positive electrode according to claim 8, wherein
the phosphorus compound comprises a structure represented by chemical formula (1): 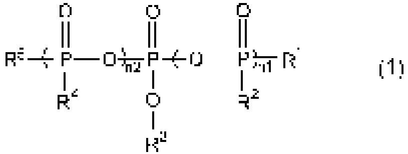
where n1 and n2 are each independently an integer equal to or greater than 0,
R¹, R², R⁴, and R⁵ each independently represent -OR or -(CH₂)ₘ₁X1,
R³ and R each independently represent a direct bond to the positive electrode active material, a hydrogen atom, -(CH₂)ₘ₂X2, a trimethylsilyl group, or a triethylsilyl group,
m1 is an integer from 0 to 15,
m2 is a natural number from 1 to 3,
X1 and X2 each independently represent a hydrogen atom, a hydroxy group, an amino group, a carboxy group, a cyano group, or a fluorine atom,
when a plurality of R²s are present, the plurality of R²s are independent of each other, and
when a plurality of R⁴s are present, the plurality of R⁴s are independent of each other.

10. The positive electrode according to claim 9, wherein
in the chemical formula (1), R¹, R², R⁴, and R⁵ each independently represent - OR, and
R³ and R each independently represent a direct bond to the positive electrode active material, a hydrogen atom, or a trimethylsilyl group.

11. The positive electrode according to claim 1, wherein
the positive electrode active material layer comprises a first layer comprising the positive electrode active material and a second layer comprising the phosphorus compound, and
the second layer coats at least a portion of a surface of the first layer.

12. A secondary battery comprising:
the positive electrode according to any one of claims 1 to 11;
a negative electrode; and
an electrolyte.
